# EUROPEAN PATENT APPLICATION

(11) **EP 3 739 200 A1**
(43) Date of publication of application: **18.11.2020**
(21) Application number: 19174880.5
(22) Date of filing: 16.05.2019
(51) Int. Cl.: F03D 7/02, F03D 80/50

(54) **AUTOMATIC ORIENTATION OF WIND TURBINE FOR VEHICLE APPROACH**

(71) Applicant: Siemens Gamesa Renewable Energy A/S, 7330 Brande (DK)
(72) Inventor: Upadhyaya G, Rashmi, 560061 Bangalore (IN)
(74) Representative: Aspacher, Karl-Georg

(57) **Abstract**

The present invention describes a controlling apparatus (100) for controlling the position of a wind turbine (1). The controlling apparatus (100) comprises:
a data collector (110) for receiving data regarding the position and/or movement data of a vehicle (10) approaching the wind turbine (1), current position and speed of the wind turbine (1) and current wind speed,
a position calculator (120) for calculating a desired position of the wind turbine (1) depending on the position and/or movement data of a vehicle (10) and on a destination position to be reached by the vehicle (10),
a command sender (130) for sending a stop command to the turbine in such a way that the wind turbine (1) is stopped in the desired position.

## Description

### Field of invention

The present invention relates to a controlling apparatus and a method of controlling a wind turbine for providing a correct orientation of the wind turbine when a vehicle is approaching.

### Art Background

Helicopters are the fast and relatively safe preferred means of deploying passengers and equipment between shores, turbines, marine vessels, and the like. An SOV (Service Operation Vessel) may be also a preferred means of transportation for offshore turbines.

Wind, waves and tide has a big influence when approaching a turbine by a helicopter or a Service Operation Vessel (SOV) and decides the angle of approach and which access point to use. Before arrival of the helicopter or SOV, the turbine must be oriented to a suitable and safe position, in order not to interfere with the approaching operations. For this, the wind turbine nacelle is, for example, positioned out of wind and the rotor blades are stopped in the best position for hoisting, in order to maximize hover references, minimize aerodynamic turbulence and provide a safe hoisting environment.

The above described procedure involves a plurality of problems. The operator should know the best suitable stop position for the turbine, in terms of rotor angle and yaw angle. Fixed predefined stop positions are available, i.e. options to be chosen by the operator are limited. The stop command is sent to the turbine manually, hence being more prone to errors.

It is therefore desirable to provide controlling devices and techniques, which may improve the speed and safety of the approaching operations of a vehicle, which has to reach a destination position on a wind turbine or in the surroundings thereof.

### Summary of the Invention

This objective may be solved by the controlling apparatus and method according to the independent claims. Advantageous embodiments of the present invention are described by the dependent claims.

According to a first aspect of the present invention a controlling apparatus for controlling the position of a wind turbine is provided. The controlling apparatus comprises:
a data collector for receiving data regarding the position and/or movement data of a vehicle approaching the wind turbine, current position and speed of the wind turbine and current wind speed,
a position calculator for calculating a desired position of the wind turbine depending on the position and/or movement data of a vehicle and on a destination position to be reached by the vehicle,
a command sender for sending a stop command to the turbine in such a way that the wind turbine stopped in the desired position.

In the context of the present invention, a "controlling apparatus" can be implemented as an hardware circuit and/or a programmable logic circuit configured and arranged for implementing the specified operations/activities. In possible embodiments, a programmable circuit may include one or more computer circuits programmed to execute a set (or sets) of instructions (and/or configuration data). The instructions (and/or configuration data) can be in the form of firmware or software stored in and accessible from a memory.

According to a second aspect of the present invention a controlling method for controlling the position of a wind turbine is provided. The method comprises:
collecting data regarding the position and/or movement data of a vehicle approaching the wind turbine and the position of the wind turbine,
calculating a desired position of the wind turbine depending on the position and/or movement data of a vehicle and on a destination position to be reached by the vehicle,
sending a stop command to the turbine in such a way that the wind turbine is stopped in the desired position.

The method may be implemented in hardware and/or software and may in particular be performed by a wind turbine controller.

With the term "vehicle" it is meant, for example, a helicopter or a ship, e.g. a SOV (Service Operation Vessel).

Data can be collected by using radar detection systems and/or proximity sensors, which may be further used in wind farms for activating aviation-obstruction lights and/or for wild life detection, etc. Advantageously, this allows using hardware, which already exists at the wind turbine or at the wind farm, for implementing the present invention.

Collected data may include the position of the vehicle approaching, its speed and acceleration. Collected data may include current blade and wind rotor position of the turbine. According to embodiments of the invention, the position calculator calculates the suitable wind rotor and/or nacelle angle orientation for the vehicle approaching. The best suitable orientation stop strategy may be also calculated.

The calculation of the desired stop position of the wind turbine is function of the destination position to be reached by the vehicle. Such destination position may be selected among a plurality of predefined destination positions. Alternatively, according to other embodiments of the present invention, the optimal destination position to be reached by the vehicle is calculated in the position calculator. The desired stop position of the wind turbine is chosen in order to avoid interference with the trajectory of the vehicle and with the destination position to be reached. In particular, the positions of the blades have to be taken into account for avoiding interference with the trajectory of the vehicle and with the destination position to be reached.

The stop command may be sent from the wind turbine or from the approaching vehicle. The stop command triggers the stopping of the wind turbine in the desired position, i.e. the stopping of the wind rotor at the desired angular position about the rotational axis and/or the stopping of the nacelle at the desired angular position about the yaw axis. Advantageously, the stop command is automated, thus eliminating possibility of human errors.

According to embodiments of the invention, the data collector may be provided in the wind turbine or in the vehicle. According to embodiments of the invention, the also the position calculator may be provided in the wind turbine or in the vehicle. If the data collector and the position calculator are provided in the vehicle, the vehicle receives data regarding position and speed of the turbine through a communication interface. After calculating the desired position of the wind turbine depending, the vehicle sends the calculated output back to the wind turbine through the same or a different communication interface.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic lateral view of a wind turbine and of a vehicle approaching the wind turbine.
Fig. 2 shows a schematic functional diagram of a controlling apparatus according to the present invention.

### Detailed Description

The illustrations in the drawings are schematically. It is noted that in different figures, similar or identical elements are provided with the same reference signs.

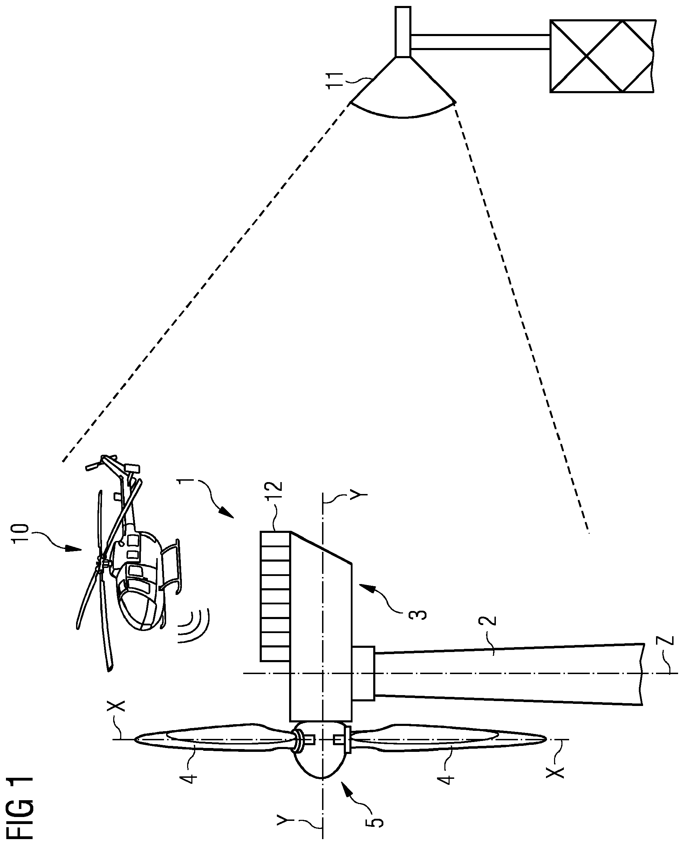

**Figure 1** shows a partial cross-sectional view of a wind turbine 1 and of a service vehicle 10 according to the invention. The wind turbine 1 comprises a tower 2, which is mounted on a non-depicted fundament. Alternatively, the wind turbine 1 is an off-shore wind turbine, e.g. mounted on a floating platform or on a platform fixed to a seabed. A nacelle 3 is arranged on top of the tower 2. In between the tower 2 and the nacelle 3 a yaw angle adjustment device (not shown) is provided, which is capable of rotating the nacelle around a vertical yaw axis Z. The wind turbine 1 further comprises a wind rotor 5 having one or more rotational blades 4 (in the perspective of Figure 1 only two blades 4 are visible). The wind rotor 5 is rotatable around a rotational axis Y to transfer the rotational energy to the electrical generator of the nacelle 3. The generation of electrical power through the present invention is not a specific object of the present invention and therefore not described in further detail. In general, when not differently specified, the terms axial, radial and circumferential in the following are made with reference to the rotational axis Y. The blades 4 extend radially with respect to the rotational axis Y. Each rotor blade 4 is mounted pivotable to wind rotor 5, in order to be pitched about respective pitch axes X. This improves the control of the wind turbine land in particular of the rotor blades 4 by the possibility of modifying the direction at which the wind is hitting the rotor blades 4. The wind turbine 1 may be included in a wind farm including a plurality of further wind turbines 1 (not shown). Figure 1 further shows a service vehicle 10 approaching the wind turbine 1. In the embodiment of figure 1, the service vehicle 10 is a helicopter, which is directed towards a destination position 12 on the wind turbine 1 or in the surroundings thereof. In the embodiment of figure 1, the destination position 12 is a helipad on the nacelle 3. According to other embodiments of the present invention (not shown), the service vehicle is a ship, in particular a SOV (Service Operation Vessel). A communication may be optionally directly established between the vehicle 10 and the wind turbine 1, in particular between the vehicle 10 and a controller of the wind turbine 1, for exchanging data. Any suitable communication interface may be used to provide the communication and the transferring of data. Figure 1 further shows a radar detection system 11. When more than one wind turbine is present, the radar station is shared by all the wind turbines of the wind farm.

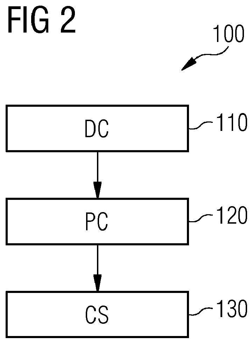

**Figure 2** shows a schematic view of a controlling apparatus 100 for controlling the position of a wind turbine 1, in order to provide an automatic orientation of the wind turbine in a desired position. The desired position is defined for allowing a quick and safe approach of the vehicle 10 to the wind turbine 1.

The controlling apparatus 100 comprises a data collector 110 for receiving data regarding the position and/or movement data of a vehicle 10, the current position and speed of the wind turbine 1 and the current speed of the wind in the surroundings of the wind turbine 1. The data collector 110 may be connected to the radar detection system 11 and/or to one or more proximity sensors (not shown) of the wind turbine 1 for receiving the position and/or velocity and/or acceleration and/or approaching direction of the vehicle 10. The data collector 110 may be connected to a controller of the wind turbine for receiving orientation of the wind rotor 5 about the rotational axis Y and orientation of the nacelle 3 about the yaw axis Z.

The controlling apparatus 100 further comprises a position calculator 120 for calculating the desired position of the wind turbine 1, which does not interfere or which interferes at least as possible with the trajectory of the vehicle 10 and with its destination position. The calculation of the desired position of the wind turbine 1 depends on the actual position and/or velocity and/or acceleration and/or approaching direction of the vehicle 10 and on the destination position. The desired position of the wind turbine 1 is defined in terms of final stop position of the wind rotor 5 about the rotational axis Y and/or final stop yaw position of the nacelle 3 about the yaw axis Z. The destination position to be reached by the vehicle 10 is selected by the position calculator 120 among a plurality of predefined destination positions, which for example may include the helipad 12 on the nacelle 3. Alternatively, according to other embodiments of the present invention may be calculated in the position calculator 120.

The controlling apparatus 100 further comprises a command sender 130 for sending a stop command to the turbine in such a way that the wind turbine 1 is stopped in the desired position. The wind turbine may be maintained blocked in the safe desired position up to when this is required by the operation of the vehicle 10, for example up to when the vehicle 10 has left the turbine 1 and has reached a safe position, which is enough distanced from the wind turbine 1. Stopping of the wind turbine 1 may be optimized in order to reach the safe desired position in a minimum amount of time.

Any of the data collector 110, the position calculator 120 and the command sender 130 may be provided in the wind turbine 1 or in the vehicle 10.

## Claims

1. A controlling apparatus (100) for controlling the position of a wind turbine (1) comprising:
a data collector (110) for receiving data regarding the position and/or movement data of a vehicle (10) approaching the wind turbine (1), current position and speed of the wind turbine (1) and current wind speed,
a position calculator (120) for calculating a desired position of the wind turbine (1) depending on the position and/or movement data of a vehicle (10) and on a destination position to be reached by the vehicle (10),
a command sender (130) for sending a stop command to the turbine in such a way that the wind turbine (1) is stopped in the desired position.

2. The controlling apparatus (100) according to claim 1, wherein the desired position of the wind turbine (1) calculated in the position calculator (120) includes at least a desired position of a wind rotor (5) of the turbine (1) about a rotational axis (Y) and/or a yaw position of a nacelle (3) of the wind turbine (1) about a yaw axis (Z).

3. The controlling apparatus (100) according to claim 1 or 2, wherein the destination position to be reached by the vehicle (10) is selected among a plurality of predefined destination positions.

4. The controlling apparatus (100) according to claim 1 or 2, wherein the destination position to be reached by the vehicle (10) is calculated in the position calculator (120).

5. The controlling apparatus (100) according to any of the previous claims, wherein the data collector (110) is provided in the wind turbine (1) or in the vehicle (10).

6. The controlling apparatus (100) according to any of the previous claims, wherein the position calculator (120) is provided in the wind turbine (1) or in the vehicle (10).

7. The controlling apparatus (100) according to any of the previous claims, wherein the command sender (130) is provided in the wind turbine (1) or in the vehicle (10).

8. Method for controlling the position of a wind turbine (1) comprising the steps of:
collecting data regarding the position and/or movement data of a vehicle (10) approaching the wind turbine (1) and the position of the wind turbine (1),
calculating a desired position of the wind turbine (1) depending on the position and/or movement data of a vehicle (10) and on a destination position to be reached by the vehicle (10),
sending a stop command to the turbine in such a way that the wind turbine (1) is stopped in the desired position.
